# EUROPEAN PATENT APPLICATION

(11) **EP 2 661 130 A1**
(43) Date of publication of application: **06.11.2013**
(21) Application number: 11856981.3
(22) Date of filing: 14.12.2011
(51) Int. Cl.: H04W 48/20

(54) **METHOD AND DEVICE FOR SELECTING SERVING GATEWAY**

(30) Priority: 28.01.2011 CN 201110032063
(71) Applicant: Huawei Technologies Co., Ltd., Shenzhen, Guangdong 518129 (CN)
(72) Inventor: JIANG, Ming, Shenzhen Guangdong 518129 (CN); SHEN, Yingyan, Shenzhen Guangdong 518129 (CN)
(74) Representative: Goddar, Heinz J.
(86) International application number: PCT/CN2011/083936
(87) International publication number: WO 2012/100603

(57) **Abstract**

The present invention relates to the field of communications and discloses a method and an apparatus for selecting a serving gateway, which can perform selection of a serving gateway when a mobile subscriber needs to establish two or more than two packet data network PDN connections. The method for selecting a serving gateway provided in an embodiment of the present invention includes: obtaining access points corresponding to at least two packet data network PDN connections that need to be established by a terminal; searching, according to the access points corresponding to the at least two packet data network PDN connections, for serving gateway sets corresponding to the at least two packet data network PDN connections; and when the serving gateway sets have an intersection set, selecting a serving gateway from the intersection set of the serving gateway sets, where bearers corresponding to the at least two packet data network PDN connections are established through a selected serving gateway. Embodiments of the present invention apply to a mobile communications network, and provide appropriate routing manners for different service requirements of each packet data network PDN connection by performing selection of a serving gateway.

## Description

This application claims priority to Chinese Patent Application No. 201110032063.1, filed with the Chinese Patent Office on January 28, 2011, and entitled "METHOD AND APPARATUS FOR SELECTING SERVING GATEWAY", which is hereby incorporated by reference in its entirety.

### TECHNICAL FIELD

The present invention relates to the field of communications technologies, and in particular, to a method and an apparatus for selecting a serving gateway.

### BACKGROUND

In an existing communications system, a main process for establishing a PDN (packet data network) connection is: An MS (Mobile Subscriber, mobile subscriber) initiates an attach request to an MME (Mobility Management Entity, mobility management entity) and carries a PDN connection request in the attach request; and then, the MME selects an SGW (serving gateway) according to an APN (Access Point Name, access point) corresponding to the PDN connection request. Through a selected SGW, a bearer under the PDN connection may be established.

The inventor finds the prior art has at least the following problems: With the continuous development of the communications system, an MS may simultaneously have a plurality of PDN connections or needs to simultaneously establish a plurality of PDN connections. In the prior art, an SGW is selected only for a PDN connection during creation of a routing scheme. If an MS needs to establish two or more than two PDN connections, the prior art does not provide a corresponding SGW selection scheme.

### SUMMARY

Embodiments of the present invention provide a method and an apparatus for selecting a serving gateway, which can perform selection of a serving gateway when an MS needs to establish two or more than two PDN connections.

To achieve the preceding objective, the embodiments of the present invention adopt the following technical solutions:

A method for selecting a serving gateway is provided and includes:
obtaining access points corresponding to at least two PDN connections that need to be established by a terminal;
searching, according to the access points corresponding to the at least two PDN connections, for serving gateway sets corresponding to the at least two PDN connections; and
when the serving gateway sets have an intersection set, selecting a serving gateway from the intersection set of the serving gateway sets, where bearers corresponding to the at least two PDN connections are established through a selected serving gateway.

An apparatus for selecting a serving gateway is provided and includes:
an obtaining unit, configured to obtain access points corresponding to at least two PDN connections that need to be established by a terminal;
a gateway searching unit, configured to search, according to the access points corresponding to the at least two PDN connections, for serving gateway sets corresponding to the at least two PDN connections; and
a first selecting unit, configured to, when the serving gateway sets have an intersection set, select a serving gateway from the intersection set of the serving gateway sets, where bearers corresponding to the at least two PDN connections are established through a selected serving gateway.

In the method and the apparatus for selecting a serving gateway provided in the embodiments of the present invention, selection of an SGW can be performed when an MS establishes two or more than two PDN connections, so that a selected SGW can meet a requirement of a service corresponding to each PDN connection, a routing requirement of each PDN connection is taken into consideration, and a user satisfaction degree is improved.

### BRIEF DESCRIPTION OF DRAWINGS

To describe the technical solutions in the embodiments of the present invention or in the prior art more clearly, the following briefly introduces accompanying drawings required for describing the embodiments or the prior art. Apparently, the accompanying drawings in the following description show merely some embodiments of the present invention, and a person of ordinary skill in the art may still derive other drawings according to these accompanying drawings without creative efforts.
FIG. 1 is a flowchart of a method for selecting a serving gateway in Embodiment 1 of the present invention;
FIG. 2 is a block diagram of an apparatus for selecting a serving gateway in Embodiment 1 of the present invention;
FIG. 3 is a flowchart of a method for selecting a serving gateway in Embodiment 2 of the present invention;
FIG. 4 is a flowchart of a method for selecting a serving gateway in Embodiment 3 of the present invention;
FIG. 5 is a flowchart of a method for selecting a serving gateway in Embodiment 4 of the present invention; and
FIG. 6 is a block diagram of an apparatus for selecting a serving gateway in Embodiment 5 of the present invention.

### DESCRIPTION OF EMBODIMENTS

The following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by a person of ordinary skill in the art based on the embodiments of the present invention without creative efforts shall fall within the protection scope of the present invention.

### Embodiment 1

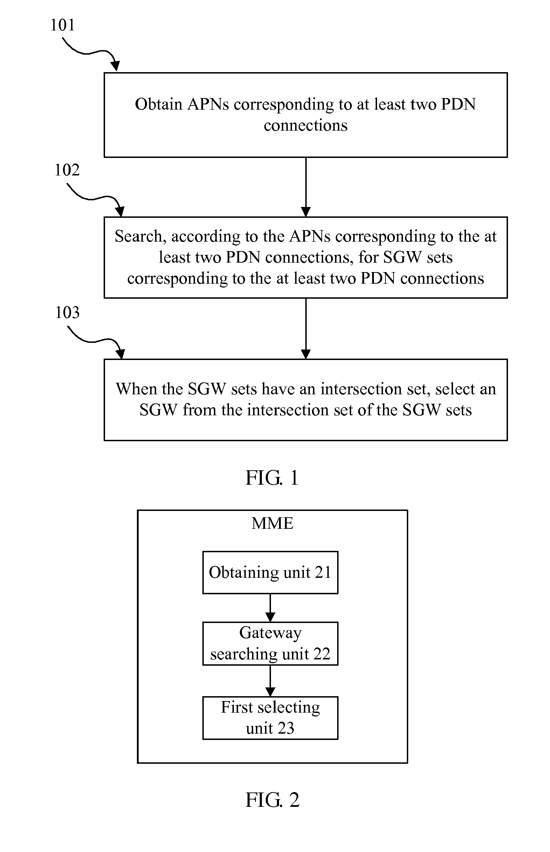

The embodiment of the present invention provides a method for selecting a serving gateway. As shown in FIG. 1, the method includes the following steps:
101: Obtain APNs corresponding to at least two PDN connections.

When a terminal needs to establish at least two PDN connections, obtain the APNs corresponding to the at least two PDN connections.

During specific implementation, corresponding APNs may be obtained by parsing request information corresponding to the PDN connections.
102: Search, according to the APNs corresponding to the at least two PDN connections, for SGW sets corresponding to the at least two PDN connections.
103: When the SGW sets have an intersection set, select an SGW from the intersection set of the SGW sets, where bearers corresponding to the at least two PDN connections are established through a selected SGW, so that the two PDN connections can be borne through one SGW, and the SGW is selected simultaneously according to the APNs of the at least two PDN connections.

The embodiment of the present invention further provides an apparatus for selecting a serving gateway. As shown in FIG. 2, the apparatus may specifically be an MME, and includes an obtaining unit 21, a gateway searching unit 22, and a first selecting unit 23.

The obtaining unit 21 is configured to, when a terminal needs to establish at least two PDN connections, obtain APNs corresponding to the at least two PDN connections. The gateway searching unit 22 is configured to search, according to the APNs corresponding to the at least two PDN connections, for SGW sets corresponding to the at least two PDN connections. The first selecting unit 23 is configured to, when the SGW sets have an intersection set, select an SGW from the intersection set of the SGW sets. Bearers under the at least two PDN connections are established through a selected SGW.

The embodiment of the present invention provides a method and an apparatus for selecting a serving gateway, and when an MS needs to establish two or more than two PDN connections, the method and the apparatus can perform selection of an SGW, thereby solving a problem that an MS needs to perform selection of an SGW when simultaneously establishing a plurality of PDN connections. A selected SGW can meet a requirement of a service corresponding to each PDN connection, a routing requirement of each PDN connection is taken into consideration, and a user satisfaction degree is improved.

### Embodiment 2

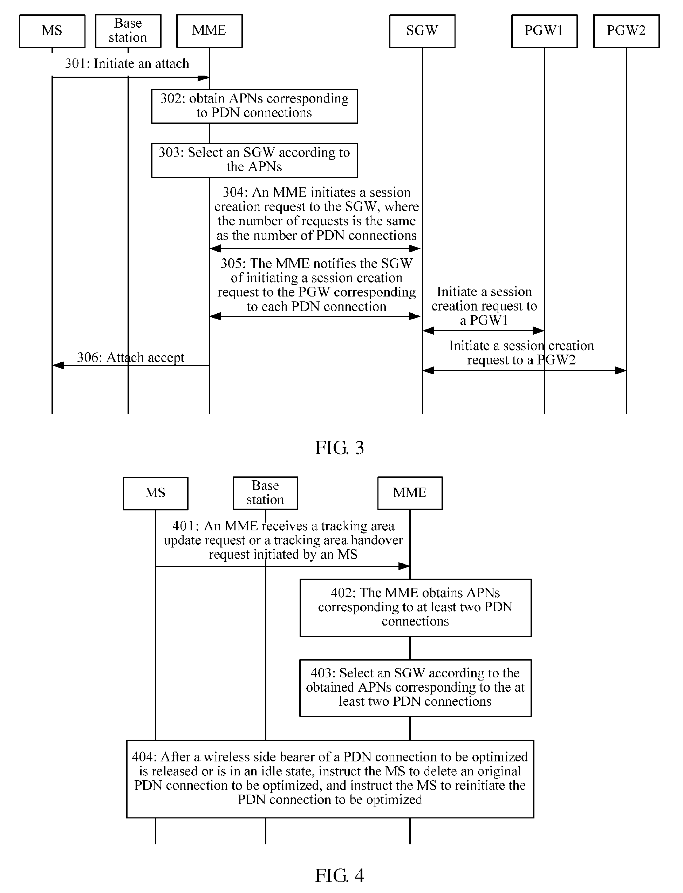

An application scenario for the embodiment of the present invention is: An MS initiates a new attach request, where the new attach request carries at least two PDN connection requests, and an SGW needs to be determined for the new attach request. Based on the application scenario, the embodiment provides a method for selecting a serving gateway. As shown in FIG. 3, the method includes the following steps:
301: An MME receives an attach request initiated by an MS, where the attach request carries at least two PDN connection requests.

A specific solution in the embodiment of the present invention for carrying at least two PDN connection requests may be implemented by modifying content of an existing communications protocol. Related protocol content is modified to allow carrying a plurality of PDN connection requests during an attach, and software setting is performed on an MS device, so that the MS can support an attach request carrying a plurality of PDN connection requests.
302: When a terminal needs to establish at least two PDN connections, obtain APNs corresponding to the at least two PDN connections. During specific implementation, corresponding APNs may be obtained by parsing request information corresponding to the PDN connections.
303: Select an SGW according to the obtained APNs corresponding to the at least two PDN connections.

Bearers corresponding to the at least two PDN connections are established through a selected SGW, so that routing paths of the at least two PDN connections can be established through one SGW, and the SGW needs to be selected simultaneously according to the APNs of the at least two PDN connections.

The selecting an SGW according to the obtained APNs corresponding to the at least two PDN connections includes:
303a: Search, according to the APNs corresponding to the at least two PDN connections, for SGW sets corresponding to the at least two PDN connections.

For example, when one APN of the APNs corresponding to the at least two PDN connections is an APN1 and a service corresponding to the APN1 must meet service routing priority, each SGW selected by the MME in an SGW set corresponding to a PDN connection of the APN1 meets a requirement of service routing priority of the APN1.

Before the SGW sets corresponding to the at least two PDN connections are searched for, the MME needs to initiate a domain name parse request of a tracking area to a DNS server, and the DNS server parses a domain name of a current tracking area, and according to a parsing result, obtains all SGWs that can provide services to the current tracking area. The SGW sets that are obtained through searching and correspond to the at least two PDN connections are selected from all the SGWs that can provide services to the current tracking area.
303b: When the SGW sets obtained through searching and an SGW set corresponding to each PDN connection have an intersection set, select an SGW from the intersection set of the SGW sets.

The SGW selected from the intersection set of the SGW sets may meet a service requirement of a different PDN connection that corresponds to each SGW set.
303c: When the SGW sets do not have an intersection set, select, according to a preset service priority, an SGW from an SGW set corresponding to a PDN connection of first-priority services.

The first-priority services refer to services which are preset to preferentially select a serving gateway in the service priority. The first-priority services include, but are not limited to, a voice service, a broadband transmission service or a service with a preferred transmission rate. A first-priority service of an MS is one type of the foregoing several types of first-priority services.

The following takes an example to illustrate two steps 303b and 303c. If the APNs of the at least two PDN connections are an APN1 and an APN2, which correspond to a voice service and a broadband transmission service respectively, and corresponding SGW sets are a SGW set 1 and a SGW set 2 respectively. In addition, a first-priority service of a current MS is set to a voice service. During selection of an SGW for the APN1 and the APN2, if the SGW 1 and the SGW 2 have an intersection set, select an SGW from the intersection set to provide a route for the APN1 and the APN2, to simultaneously meet requirements of the two PDN connections; and if the SGW set 1 and the SGW set 2 do not have an intersection set, select, according to the voice service that is preset as a preferential service, an SGW from the SGW set 1 corresponding to the APN1 to be an SGW commonly used by the two PDN connections.

To successfully bear the PDN connections, the MME in the embodiment of the present invention generally also needs to initiate a domain name parse request of the APNs corresponding to the at least two PDN connection requests to the DNS server. After parsing domain names of the APNs, the DNS server obtains, according to a parsing result, a PGW (packet data network gateway) set that can meet a service requirement of a corresponding APN for each APN. The MME selects a PGW from the PGW set for each APN.
304: After the SGW and the PGW are selected, the MME initiates a session creation request separately to the selected SGW according to the at least two PDN connections. The number of initiated session requests should be the same as the number of the at least two PDN connections.
305: After a session with the SGW is successfully created, the MME notifies the selected SGW of separately initiating, according to the at least two PDN connections, a session creation request to the PGW.

After creation of the session for the SGW is completed, the MME notifies the SGW of initiating a session creation request to each selected PGW. FIG. 3 takes a PGW1 and a PGW 2 as an examples for illustration.

306: After creation of sessions initiated to the SGW and the PGW is completed, the MME initiates an attach accept to the MS.

After that, the MS receives the attach accept and continues to complete a subsequent procedure.

The embodiment provides a method for selecting a serving gateway. When an MS initiates an attach request to an MME, at least two PDN connection requests are carried, and the MME selects an SGW according to the at least two PDN connection requests, thereby solving a problem that an MS needs to perform selection of an SGW when carrying at least two PDN connections in an attach request. The method provided in the embodiment of the present invention may take different routing requirements of the at least two PDN connections into consideration. A combination of an SGW and a PGW selected from an available routing scheme can support service requirements of the at least two PDN connections, thereby meeting routing selection requirements of different services corresponding to a plurality of PDN connections for an MS.

### Embodiment 3

An application scenario for the embodiment of the present invention is: An MS moves out from a current tracking area, and a tracking area handover or update occurs. When the MS is located within a range of a certain tracking area, a system can locate the MS through the tracking area. If the MS moves out the tracking area or hands over the tracking area, an SGW needs to be reselected. Based on the application scenario, the embodiment provides a method for selecting a serving gateway. As shown in FIG 4, the method includes the following steps:
401: When an MS performs a tracking area update or handover action, an MME receives a tracking area update request or a tracking area handover request initiated by the MS.
402: The MME obtains APNs corresponding to at least two PDN connections.

The at least two PDN connections obtained by the MME refer to at least two PDN connections that are obtained by the MME and established in a tracking area that is updated or is the target tracking area for handover.

The embodiment of the present invention mainly applies to a case of at least two PDN connections established in a tracking area that is updated or is the target tracking area for handover. Therefore, after the MS performs the tracking area update or handover action, the MME in the embodiment of the present invention obtains the at least two PDN connections established in the tracking area that is updated or is the target tracking area for handover.
403: Select an SGW according to the obtained APNs corresponding to the at least two PDN connections.

Bearers corresponding to the at least two PDN connections are established through a selected SGW, so that the at least two PDN connections can be borne through one SGW, and the SGW needs to be selected simultaneously according to the APNs of the at least two PDN connections.

For a specific step for selecting one SGW according to an APN corresponding to each PDN connection, reference may be made to descriptions from 303a to 303c in Embodiment 2.

The SGW obtained in this step may be the same as an SGW existed before a tracking area is updated or before handover.

If the MS has a PDN connection to be optimized in the tracking area that is updated or is the target tracking area for handover, after step 403, the method further includes the following steps:
404: After a wireless side bearer of the PDN connection to be optimized is released or is in an idle state, instruct the MS to delete an original PDN connection to be optimized and instruct the MS to reinitiate the PDN connection to be optimized.

After the PDN connection to be optimized is reinitiated, the MME further needs to reselect a PGW of the PDN connection to be optimized. The step for selecting the PGW is: The MME initiates a domain name parse request of an APN corresponding to the PDN connection to be optimized to a DNS server; after parsing a domain name of the APN, the DNS server obtains, according to a parsing result, a PGW set that can meet a service requirement of the corresponding APN for the APN to be optimized; and the MME selects a PGW from the PGW set for the APN corresponding to the PDN connection to be optimized.

The embodiment provides a method for selecting a serving gateway. When an MS performs an action such as tracking area update or handover, an SGW is reselected according to an APN corresponding to a current PDN connection, thereby simultaneously providing appropriate route selection for different service requirements corresponding to different PDN connections of an MS in a new tracking area. In addition, after the SGW is reselected, for some PDN connections that need to be optimized, the MME performs a PDN connection reestablishment process to select a PGW for route optimization for the PDN connections that need to be optimized, so as to improve a routing effect.

### Embodiment 4

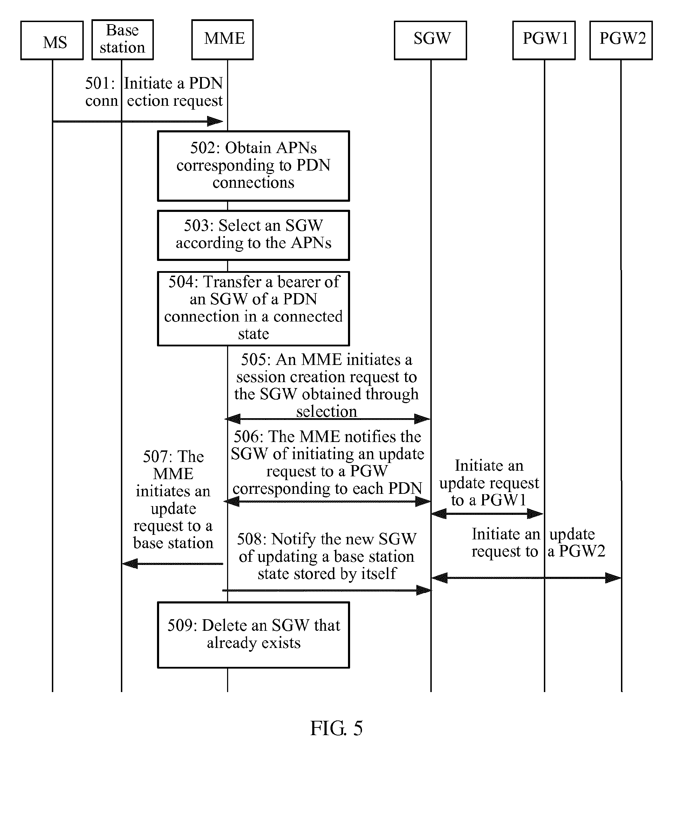

An application scenario for the embodiment of the present invention is: In a case that a current system has several PDN connections, an SGW has been selected, and each PDN connection has selected a PGW, an MS initiates a new PDN connection request again. In the application scenario, the embodiment of the present invention provides a method for selecting a serving gateway. As shown in FIG. 5, the method includes the following steps:
501: When a PDN connection in a connected state exists, receive at least one PDN connection request initiated by an MS.
502: An MME obtains APNs corresponding to at least two PDN connections.

In the embodiment of the present invention, the at least two PDN connections are a PDN connection corresponding to the at least one PDN connection request and the PDN connection in the connected state.
503: Select an SGW according to the obtained APNs corresponding to the at least two PDN connections.

For a specific step for selecting one SGW through an APN corresponding to each PDN connection, reference may be made to descriptions from 303a to 303c in Embodiment 2.
504: When an SGW corresponding to the PDN connection in the connected state is different from the SGW obtained through selection, a bearer of the SGW of the PDN connection in the connected state is transferred, so that the bearer corresponding to the PDN connection in the connected state is transferred to the SGW obtained through selection. A specific bearer transfer process may be implemented through the following steps from 505 to 509.

Certainly, when the SGW corresponding to the PDN connection in the connected state is the same as the SGW obtained through selection, a bearer transfer is not needed.
505: When an SGW bearer transfer is performed, the MME initiates a session creation request to the new SGW obtained through selection.

The number of initiated session requests should be the same as the number of current PDN connections. For each PDN connection, initiate a session creation request to the new SGW, so that each PDN connection establishes its route on the new SGW.
506: After the session creation request is accepted, the MME notifies the new SGW of separately initiating an update request to a PGW according to all current PDN connections.

After creation of a session for the new SGW is completed, the MME notifies the new SGW of initiating a session creation request to the PGW corresponding to each PDN connection. FIG. 5 takes a PGW1 and a PGW2 as examples for illustration. The SGW initiates an update request to each PGW, so that each PDN connection establishes a routing path to each PGW through the new SGW.
507: The MME initiates an update request to a base station.

The MME initiates the update request to the base station. The update request carries information of the new SGW, so that the base station updates old SGW information stored by itself to the obtained information of the new SGW, for example, information such as an IP address of the new SGW.
508: Notify the new SGW of updating a base station state stored by itself.

An SGW that provides a routing bearer for each PDN connection further store state information of the base station. If the base station changes its state after completing the update, notify the new SGW of updating the base station state stored by itself to the changed base station state.

For example, an IP address of the base station may change after the base station completes the update. Therefore, the new SGW needs to be notified of updating the IP address of the base station stored by itself.
509: Delete the SGW that already exists.

Before the MS initiates the at least one PDN connection request, an SGW already exists to provide a service for the PDN connection in the connected state. After the new SGW is selected, transfer a bearer corresponding to each PDN connection to the selected new SGW and delete the SGW that already exists.

The embodiment provides a method for selecting a serving gateway. In a case that an SGW already exists, an MS initiates at least one new PDN connection request, and an MME reselects a new SGW according to a new PDN connection corresponding to the at least one PDN connection request and a PDN connection in a connected state. The reselected SGW is an SGW that may be used by APNs corresponding to all PDN connections. For a subsequently established new PDN connection, its service requirement may not be met by an SGW used by the PDN connection that currently exists. A routing requirement of a newly established PDN connection can be met by reselecting an SGW, and meanwhile, routing requirements of different services corresponding to all PDN connections are ensured.

### Embodiment 5

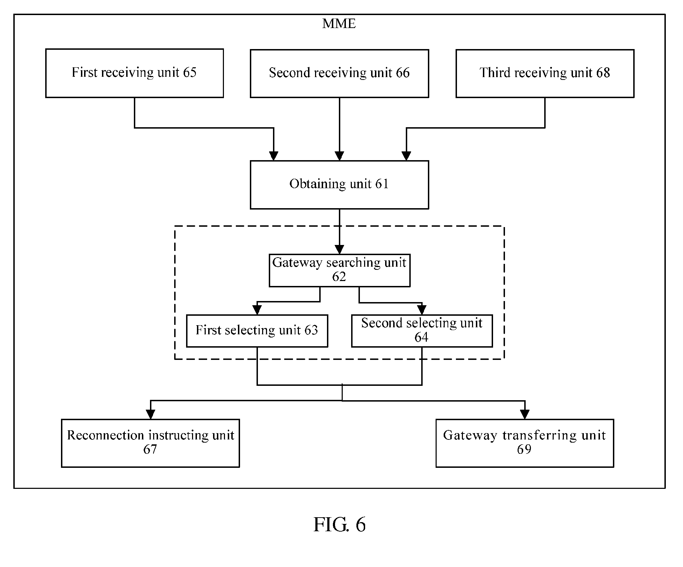

The embodiment of the present invention further provides an apparatus for selecting a serving gateway. As shown in FIG 6, the apparatus may specifically be an MME, and includes an obtaining unit 61, a gateway searching unit 62, a first selecting unit 63, and a second selecting unit 64.

The obtaining unit 61 is configured to, when a terminal needs to establish at least two PDN connections, obtain APNs corresponding to the at least two PDN connections. The gateway searching unit 62 is configured to search, according to the APNs corresponding to the at least two PDN connections, for SGW sets corresponding to the at least two PDN connections. For example, when one APN of the APNs corresponding to the at least two PDN connections is an APN1 and a service corresponding to the APN1 must meet service routing priority, each SGW selected by the MME in an SGW set corresponding to a PDN connection of the APN1 meets a requirement of service routing priority of the APN1.

The first selecting unit 63 is configured to, when the SGW sets have an intersection set, select an SGW from the intersection set of the SGW sets. The second selecting unit 64 is configured to, when the SGW sets do not have an intersection set, select, according to a preset service priority, an SGW from an SGW set corresponding to a PDN connection of first-priority services. In a case that the SGW sets do not have an intersection set, the apparatus for selecting a serving gateway performs selection of an SGW according to a related description in 303c in Embodiment 2. Therefore, bearers corresponding to the at least two PDN connections are established through the selected SGW.

Before the SGW sets corresponding to the at least two PDN connections are searched for, the MME needs to initiate a domain name parse request of a tracking area to a DNS server, and the DNS server parses a domain name of a current tracking area, and according to a parsing result, obtains all SGWs that can provide services to the current tracking area. The SGW sets that are obtained through searching and correspond to the at least two PDN connections are selected from all the SGWs that can provide services to the current tracking area. In addition, the MME further initiates a domain name parse request of the APNs corresponding to the at least two PDN connection requests to the DNS server. After parsing domain names of the APNs, the DNS server obtains, according to a parsing result, a PGW set that can meet a service requirement of a corresponding APN for each APN. The MME selects a PGW from the PGW set for each APN.

The apparatus for selecting a serving gateway provided in the embodiment of the present invention may apply to a plurality of communication scenarios. Three types of application scenarios are specifically taken as examples for illustration in the following.

### Application scenario 1:

This application scenario is: An MS initiates a new attach request, where the new attach request carries at least two PDN connection requests. The apparatus for selecting a serving gateway further includes a first receiving unit 65, configured to receive the attach request initiated by the MS, where the attach request carries the at least two PDN connection requests. A specific solution for carrying at least two PDN connection requests in the attach request may be implemented by modifying content of an existing communications protocol. Related protocol content is modified to allow carrying a plurality of PDN connection requests during an attach, and meanwhile, software setting is performed on an MS device, so that the MS can support an attach request carrying a plurality of PDN connection requests. The APNs obtained by the obtaining unit 61 are APNs that correspond to the at least two PDN connection requests carried in the attach request. The gateway searching unit 62 is configured to search, according to the APNs corresponding to the at least two PDN connections, for SGW sets corresponding to the at least two PDN connections. The first selecting unit 63 is configured to, when the SGW sets have an intersection set, select an SGW from the intersection set of the SGW sets. The second selecting unit 64 is configured to, when the SGW sets do not have an intersection set, select, according to a preset service priority, an SGW from an SGW set corresponding to a PDN connection of first-priority services.

### In this application scenario, after the SGW and the PGW are selected, the apparatus for selecting a serving gateway completes a session creation process according to 304 to 306 in Embodiment 2.

### Application scenario 2:

This application scenario is: An MS moves out from a current tracking area and a tracking area handover or update occurs. The apparatus for selecting a serving gateway further includes a second receiving unit 66, configured to receive a tracking area update request or a tracking area handover request initiated by the MS. An APN obtained by the obtaining unit 61 is an APN corresponding to a PDN connection that needs to be established by the MS in a tracking area that is updated or is the target tracking area for handover. After selection of the SGW is completed, if the MS has a PDN connection to be optimized in the tracking area that is updated or is the target tracking area for handover, a reconnection instructing unit 67 is further configured to, after a wireless side bearer of the PDN connection to be optimized is released or is in an idle state, instruct the MS to delete an original PDN connection to be optimized, and instruct the MS to reinitiate a PDN connection to be optimized.

### Application scenario 3:

When an application scenario is that, in a case that a current system has a PDN connection in a connected state and an MS initiates a new PDN connection request again, a third receiving unit 68 is configured to receive at least one PDN connection request initiated by the terminal. The obtaining unit 61 is configured to obtain APNs corresponding to the at least two PDN connections, and in this application scenario, the at least two PDN connections are a PDN connection corresponding to the at least one PDN connection request and the PDN connection in the connected state. After a new SGW is selected, if an SGW corresponding to the PDN connection in the connected state is different from the SGW obtained through selection, a gateway transferring unit 69 is further configured to transfer a bearer of the SGW of the PDN connection in the connected state to the SGW obtained through selection.

In this application scenario, the apparatus for selecting a serving gateway completes a bearer transfer according to 505 to 509 in Embodiment 4.

The embodiment provides an apparatus for selecting a serving gateway. When a current MS has at least two PDN connections, an MME selects an SGW according to the at least two PDN connections, thereby solving a problem that selection of an SGW is performed for a plurality of PDN connections of an MS. The selected SGW may be used by APNs of all PDN connections of an MS to meet routing requirements of different services corresponding to each PDN connection of the current MS.

Through the foregoing descriptions of the implementation manners, persons skilled in the art may clearly understand that the present invention may be implemented by software plus necessary universal hardware, and definitely, may also be implemented by hardware, but in many cases, the former one is a better implementation manner. Based on such understanding, the technical solutions of the present invention essentially, or the part contributing to the prior art may be implemented in a form of a software product. The computer software product is stored in a readable storage medium, for example, a floppy disk, a hard disk, or an optical disk of a computer, and includes several instructions for instructing a computer device (which may be a personal computer, a server, a network device, or the like) to perform the methods described in the embodiments of the present invention.

The foregoing descriptions are merely specific embodiments of the present invention, but are not intended to limit the protection scope of the present invention. Any variation or replacement readily figured out by persons skilled in the art within the technical scope disclosed in the present invention shall fall within the protection scope of the present invention. Therefore, the protection scope of the present invention shall be subject to the protection scope of the claims.

## Claims

1. A method for selecting a serving gateway, comprising:
obtaining access points corresponding to at least two packet data network PDN connections that need to be established by a terminal;
searching, according to the access points corresponding to the at least two packet data network PDN connections, for serving gateway sets corresponding to the at least two packet data network PDN connections; and
when the serving gateway sets have an intersection set, selecting a serving gateway from the intersection set of the serving gateway sets, wherein bearers corresponding to the at least two packet data network PDN connections are established through a selected serving gateway.

2. The method for selecting a serving gateway according to claim 1, further comprising:
when the serving gateway sets do not have an intersection set, selecting, according to a preset service priority, a serving gateway from a serving gateway set corresponding to a packet data network PDN connection of first-priority services, wherein bearers corresponding to the at least two packet data network PDN connections are established through a selected serving gateway; and the first-priority services refer to services which are preset to preferentially select a serving gateway in the service priority.

3. The method for selecting a serving gateway according to claim 2, wherein the first-priority services comprise one type of: a voice service, a broadband transmission service and a service with a preferred transmission rate.

4. The method for selecting a serving gateway according to any one of claims 1 to 3, wherein the method is implemented by a mobility management entity MME.

5. The method for selecting a serving gateway according to any one of claims 1 to 3, further comprising:
receiving an attach request initiated by the terminal, wherein the attach request carries at least two packet data network PDN connection requests, and the at least two packet data network PDN connections that need to be established by the terminal are packet data network PDN connections corresponding to the at least two packet data network PDN connection requests carried in the attach request.

6. The method for selecting a serving gateway according to any one of claims 1 to 3, further comprising:
receiving a tracking area update request or a tracking area handover request initiated by the terminal; wherein the at least two packet data network PDN connections that need to be established by the terminal are packet data network PDN connections that need to be established by the terminal in a tracking area that is updated or is the target tracking area for handover.

7. The method for selecting a serving gateway according to claim 6, wherein if the terminal has a packet data network PDN connection to be optimized in the tracking area that is updated or is the target tracking area for handover, the method further comprises:
when a wireless side bearer of the packet data network PDN connection to be optimized is released or is in an idle state, instructing the terminal to delete an original packet data network PDN connection to be optimized, and instructing the terminal to reinitiate the packet data network PDN connection to be optimized.

8. The method for selecting a serving gateway according to any one of claims 1 to 3, further comprising:
when the terminal has a packet data network PDN connection in a connected state, receiving at least one packet data network PDN connection request initiated by the terminal; and
when a serving gateway corresponding to the packet data network PDN connection in the connected state is different from the serving gateway obtained through selection, transferring a bearer corresponding to the packet data network PDN connection in the connected state to the selected serving gateway.

9. An apparatus for selecting a serving gateway, comprising:
an obtaining unit, configured to obtain access points corresponding to at least two packet data network PDN connections that need to be established by a terminal;
a gateway searching unit, configured to search, according to the access points corresponding to the at least two packet data network PDN connections, for serving gateway sets corresponding to the at least two packet data network PDN connections; and
a first selecting unit, configured to, when the serving gateway sets have an intersection set, select a serving gateway from the intersection set of the serving gateway sets, wherein bearers corresponding to the at least two packet data network PDN connections are established through a selected serving gateway.

10. The apparatus for selecting a serving gateway according to claim 9, further comprising:
a second selecting unit, configured to, when the serving gateway sets do not have an intersection set, select, according to a preset service priority, a serving gateway from a serving gateway set corresponding to a packet data network PDN connection of first-priority services; wherein bearers corresponding to the at least two packet data network PDN connections are established through a selected serving gateway; and the first-priority services refer to services which are preset to preferentially select a serving gateway in the service priority.

11. The method for selecting a serving gateway according to claim 10, wherein the first-priority services comprise one type of: a voice service, a broadband transmission service and a service with a preferred transmission rate.

12. The apparatus for selecting a serving gateway according to any one of claims 9 to 11, wherein the apparatus is a mobility management entity MME.

13. The apparatus for selecting a serving gateway according to any one of claims 9 to 11, further comprising:
a first receiving unit, configured to receive an attach request initiated by the terminal, wherein the attach request carries at least two packet data network PDN connection requests, and the at least two packet data network PDN connections that need to be established by the terminal are packet data network PDN connections corresponding to the at least two packet data network PDN connection requests carried in the attach request.

14. The apparatus for selecting a serving gateway according to any one of claims 9 to 11, further comprising:
a second receiving unit, configured to receive a tracking area update request or a tracking area handover request initiated by the terminal; wherein the at least two packet data network PDN connections that need to be established by the terminal are packet data network PDN connections that need to be established by the terminal in a tracking area that is updated or is the target tracking area for handover.

15. The apparatus for selecting a serving gateway according to claim 14, wherein if the terminal has a packet data network PDN connection to be optimized in the tracking area that is updated or is the target tracking area for handover, the apparatus further comprises:
a reconnection instructing unit, configured to, after a wireless side bearer of the packet data network PDN connection to be optimized is released or is in an idle state, instruct the terminal to delete an original packet data network PDN connection to be optimized, and instruct the terminal to reinitiate the packet data network PDN connection to be optimized.

16. The apparatus for selecting a serving gateway according to any one of claims 9 to 11, further comprising:
a third receiving unit, configured to, when the terminal has a packet data network PDN connection in a connected state, receive at least one packet data network PDN connection request initiated by the terminal; and
a gateway transferring unit, configured to, when a serving gateway corresponding to the packet data network PDN connection in the connected state is different from the serving gateway obtained through selection, transfer a bearer of the serving gateway of the packet data network PDN connection in the connected state, and change the serving gateway to the serving gateway obtained through selection.
